(19) Europäisches Patentamt
European Patent Office
Office européen des brevets

(11) **EP 3 432 467 B1**

(12) **EUROPEAN PATENT SPECIFICATION**

(45) Date of publication and mention
of the grant of the patent:
**06.04.2022  Bulletin 2022/14**

(21) Application number: **17766080.0**

(22) Date of filing: **30.01.2017**

(51) International Patent Classification (IPC):
*H02P 27/08* (2006.01)    *H02P 27/04* (2016.01)
*H02P 21/00* (2016.01)

(52) Cooperative Patent Classification (CPC):
**H02P 27/08; H02P 21/00; H02P 27/04;**
H02P 2209/09

(86) International application number:
**PCT/JP2017/003085**

(87) International publication number:
**WO 2017/159072 (21.09.2017 Gazette 2017/38)**

(54) **MOTOR CONTROL DEVICE AND DRIVE SYSTEM**

MOTORSTEUERUNGSVORRICHTUNG UND ANTRIEBSSYSTEM

DISPOSITIF DE COMMANDE DE MOTEUR ET SYSTÈME D'ENTRAÎNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.03.2016   JP 2016050388**

(43) Date of publication of application:
**23.01.2019   Bulletin 2019/04**

(73) Proprietor: **Hitachi Industrial Equipment Systems
Co., Ltd.
Chiyoda-ku
Tokyo 101-0022 (JP)**

(72) Inventors:
• **TAKAOKA, Midori
Tokyo 100-8280 (JP)**
• **TOBARI, Kazuaki
Tokyo 100-8280 (JP)**

• **IWAJI, Yoshitaka
Tokyo 100-8280 (JP)**
• **ONUMA, Yusaku
Tokyo 101-0022 (JP)**
• **SUGIMOTO, Takuya
Tokyo 101-0022 (JP)**

(74) Representative: **Mewburn Ellis LLP
Aurora Building
Counterslip
Bristol BS1 6BX (GB)**

(56) References cited:
**EP-A1- 2 642 655      JP-A- 2007 143 316
JP-A- 2013 141 336      JP-A- 2014 072 936
JP-A- 2015 053 824      JP-A- 2016 005 378
US-A1- 2010 134 053**

**Description**

Technical Field

The present invention relates to a motor control device and a drive system to reduce a harmonic loss.

Background Art

A motor drive system by a PWM control used in an inverter is desired to reduce various types of losses. The losses are classified into a loss occurring in a motor (hereinafter, referred to as motor loss) and a loss occurring in the inverter (hereinafter, referred to as inverter loss). The motor loss includes a loss caused by a fundamental component (hereinafter, referred to as fundamental wave loss) and a loss caused by harmonic components (hereinafter, referred to as harmonic loss) . The inverter loss includes a loss caused by an ON/OFF operation of a switching element (hereinafter, referred to as switching loss) and a loss occurring when the switching element is conducting (hereinafter, referred to as conduction loss).

The fundamental wave loss is reduced by employing a variable speed drive using the inverter compared to a constant speed drive using a commercial power source. However, the switching operation causes a distortion in voltage and current, and generates harmonic components. Therefore, the harmonic loss is increased. The harmonic components and the harmonic loss can be reduced by increasing a carrier frequency of the inverter. However, the switching loss is increased at the same time. Therefore, the harmonic loss is desired to be reduced without increasing the carrier frequency. In particular, it has been known that the harmonic components and the harmonic loss are apparently increased when the motor is driven in an over-modulation region, and thus it is desired to reduce the harmonic components and the harmonic loss.

PTL 1 is a technique of a synchronous PWM control for a railway system, in which a pulse voltage is turned on or off one or more times near zero-cross points (0 and 180 deg) and peak points (90 and 270 deg) of a fundamental wave phase in order to reduce the harmonic loss which is caused in the over-modulation region, and an on or off state is held in other phase regions. US 2010/0134053 A1 proposes a control device for an electric rotating machine, including a unit for preparing a pattern having first and second periods by comparing a triangular wave and a sine wave having an amplitude ratio set at each value of a modulation factor, and selecting one pattern corresponding to an instructed modulation factor, and a unit for applying a control voltage, set at low and high levels in response to first and second periods of the selected pattern, to a generator. EP 2 642 655 A1 proposes a power conversion apparatus that can reduce a number of switching times.

Citation List

Patent Literature

PTL 1: JP 2015-053824 A

Summary of Invention

Technical Problem

Problems of PTL 1 are that as the technique is a method for the synchronous PWM control, it does not cope with an asynchronous PWM control, and that as the technique is for the railway system, an upper limit of the carrier frequency is low, and the effect can be achieved only in a narrow range of drive region.

In order to reduce the harmonic loss of the over-modulation region and to widen a drive range showing the effect, there is a need to cope with the asynchronous PWM control and to increase the upper limit of the carrier frequency to a radio frequency.

Therefore, an object of the invention is to reduce or minimize the harmonic loss which is caused when an alternating-current motor is driven in the over-modulation region.

Solution to Problem

In order to solve the above problems, as an example of the invention, a final correction signal wave is switched from zero to the synchronous correction signal in a case where a modulation rate reaches a predetermined value equal to or greater than one, and a final amplitude is switched from the first amplitude to a fixed amplitude in a case where the modulation rate reaches a predetermined value equal to or greater than one. Accordingly, in a first aspect, the invention provides a motor control device as set out in claim 1. In a second aspect, the invention provides a motor drive system as set out in claim 7.

Advantageous Effects of Invention

According to the invention, it is possible to reduce a harmonic loss, using an inverter, which is caused when an alternating-current motor is driven in an over-modulation region. With this configuration, it is possible to achieve effects such as a high power of the alternating-current motor or a minimization of a cooling system.

Brief Description of Drawings

[FIG. 1] FIG. 1 is a diagram illustrating a configuration of a first embodiment of the invention.
[FIG. 2] FIG. 2 is components of the first embodiment of the invention.
[FIG. 3] FIG. 3 is an exemplary pulse pattern of a synchronous PWM control.
[FIG. 4] FIG. 4 is an exemplary pulse pattern in an over-modulation region and a modulation region.
[FIG. 5] FIG. 5 is an example of a pulse pattern of a 3rd harmonic superimposed system.
[FIG. 6] FIG. 6 is a relation between a harmonic resistance and a harmonic number.
[FIG. 7] FIG. 7 is a relation of a harmonic voltage to a harmonic number and a harmonic loss.
[FIG. 8] FIG. 8 is an example of an optimized pulse pattern.
[FIG. 9] FIG. 9 is a relation between a pulse pattern and a carrier wave.
[FIG. 10] FIG. 10 is a pulse pattern of the 3rd harmonic superimposed system at a modulation rate Kh* 1.2, and fc* = 21f1*.
[FIG. 11] FIG. 11 is a pulse pattern of the embodiment at the modulation rate Kh* 1.2, and fc2* = 33f1*.
[FIG. 12] FIG. 12 is a pulse pattern of the embodiment at the modulation rate Kh* 1.15 - 1.21, and fc2* = 33f1*.
[FIG. 13] FIG. 13 is a pulse pattern of the embodiment at the modulation rate Kh* 1.22 - 1.27, and fc2* = 33f1*.
[FIG. 14] FIG. 14 is an effect of the first embodiment of the invention.
[FIG. 15] FIG. 15 is a diagram illustrating a configuration of a second embodiment of the invention.
[FIG. 16] FIG. 16 is an exemplary pulse pattern of an asynchronous PWM control.
[FIG. 17] FIG. 17 is a reference period of the asynchronous PWM control.
[FIG. 18] FIG. 18 is an effect of the second embodiment of the invention.
[FIG. 19] FIG. 19 is a diagram illustrating a configuration of a third embodiment of the invention.
[FIG. 20] FIG. 20 is a frequency dependency of the harmonic loss.

Description of Embodiments

First Embodiment

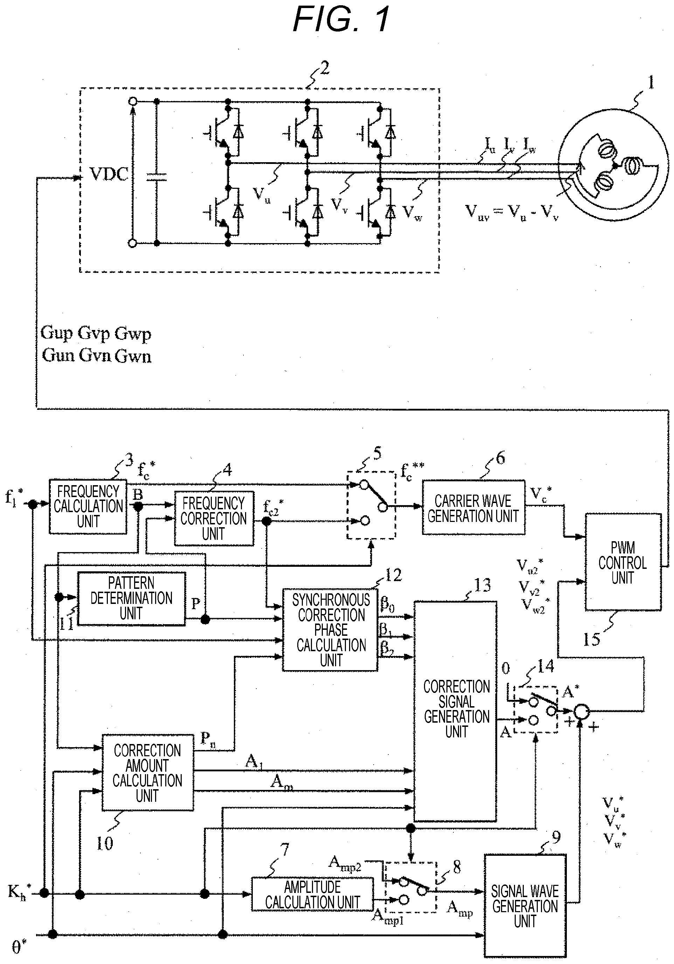

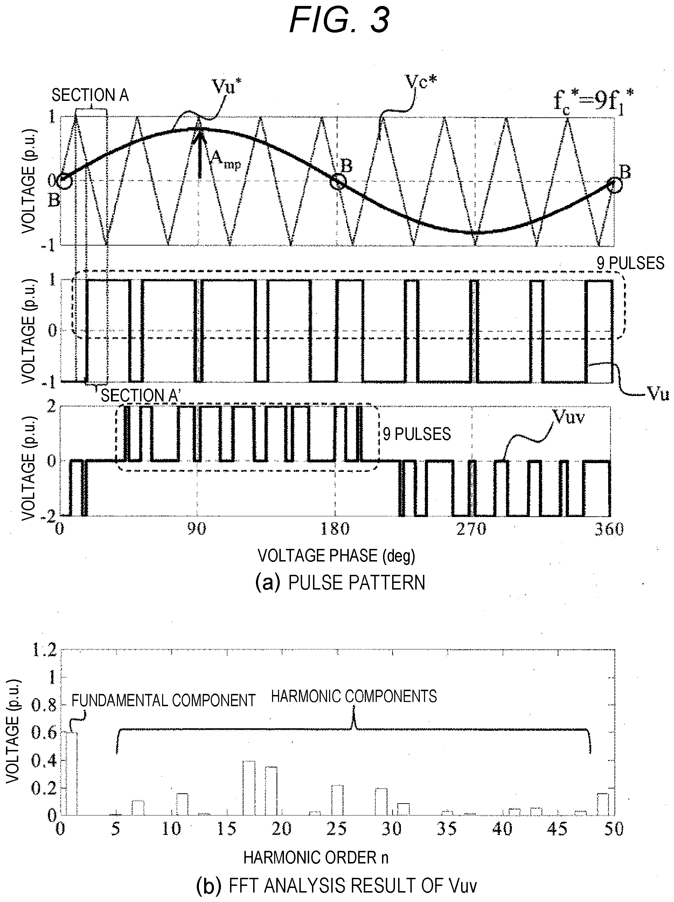

A first embodiment will be described using FIGS. 1 to 14, and 20.

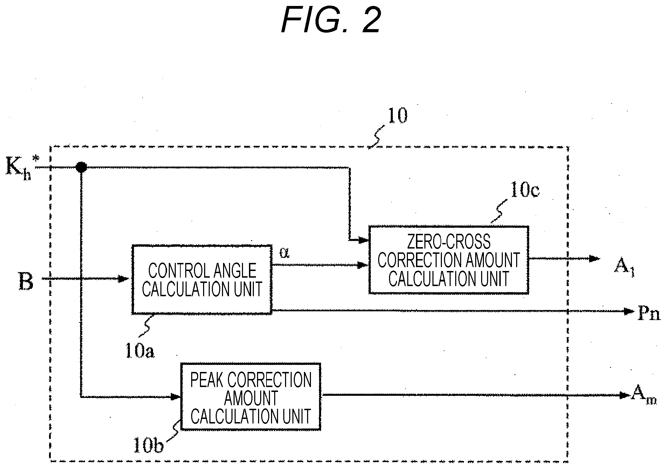

FIG. 1 is a diagram illustrating a configuration of a motor control device in the first embodiment, and FIG. 2 is components thereof. An inverter 2 can control an alternating-current motor 1 by converting a DC voltage VDC into an arbitrary frequency. The alternating-current motor 1 is applied with pulse voltages (U-phase pulse voltage Vu, V-phase pulse voltage Vv, and W-phase pulse voltage Vw). Three-phase alternating currents (U-phase current Iu, V-phase current Iv, and W-phase current Iw) flow to drive the alternating-current motor 1 at a drive frequency f. Herein, a voltage applied between U-V phases of the alternating-current motor 1 is called a line voltage Vuv.
A frequency calculation unit 3 calculates a carrier frequency fc* and a base number B on the basis of a fundamental wave frequency f1*. Herein, the base number B is a ratio of the carrier frequency fc* and the fundamental wave frequency f1*.
A frequency correction unit 4 calculates a corrected carrier frequency fc2* on the basis of the base number B and a pattern P.
A first modulation mode determination unit 5 switches a final carrier frequency fc2** from the carrier frequency fc* to the corrected carrier frequency fc2* when a modulation rate Kh* reaches a predetermined value equal to or greater than one.
A carrier wave generation unit 6 outputs a carrier wave Vc* on the basis of the final carrier frequency fc**. The carrier wave Vc* is a triangular wave of amplitude "1" (normalization by DC voltage VDC/2) as illustrated in FIG. 3, and is a function depending on a voltage phase θ*.
An amplitude calculation unit 7 calculates a first amplitude Amp1 on the basis of the modulation rate Kh*.

A second modulation mode determination unit 8 switches a final amplitude Amp from the first amplitude Amp1 to a fixed amplitude Amp2 when the modulation rate Kh* reaches a predetermined value equal to or greater than one.

A signal wave generation unit 9 outputs signal waves (U-phase signal wave Vu*, V-phase signal wave Vv*, and W-phase signal wave Vw*) on the basis of the voltage phase θ* and the final amplitude Amp. The signal wave Vu* is a sinusoidal wave as illustrated in FIG. 3, and is a function depending on the voltage phase θ*.

A correction amount calculation unit 10 calculates a pulse number Pn, a zero-cross correction amount A1, and a peak correction amount Am on the basis of the modulation rate Kh*, the voltage phase θ*, and the base number B.

In a pattern determination unit 11, the pattern P is determined on the basis of the base number. Herein, when the pattern P is "1," the pattern becomes a first pattern, and when P is "2," the pattern becomes a second pattern.

A synchronous correction phase calculation unit 12 calculates a zero holding phase β0, a zero-cross phase β1, and a peak phase β2 on the basis of the pulse number Pn, the pattern P, the corrected carrier frequency fc2*, and the fundamental wave frequency f1*. Herein, the zero holding phase β0 is a phase of 1/4 period of the carrier wave Vc*.

A correction signal generation unit 13 generates a synchronous correction signal A on the basis of the zero holding phase β0, the zero-cross phase β1, the peak phase β2, the zero-cross correction amount A1, the peak correction amount Am, and the voltage phase θ*. The synchronous correction signal A is a function depending on the voltage phase θ*.

A third modulation mode determination unit 14 switches a final correction signal A* from zero to the synchronous correction signal A when the modulation rate Kh* reaches a predetermined value equal to or greater than one.

A PWM control unit 15 compares correction signal waves Vu2*, Vv2*, and Vw2* obtained by adding the final correction signal A* to the signal waves Vu*, Vv*, and Vw* with the carrier wave Vc* to generate gate signals Gun, Gup, Gvn, Gvp, Gwn, and Gwv, and outputs the gate signals to the inverter 2. The inverter 2 controls switching elements to be turned on or off on the basis of the gate signals Gun, Gup, Gvn, Gvp, Gwn, and Gwv, and applies the pulse voltages Vu, Vv, and Vw to the alternating-current motor 1.

FIG. 2 is a diagram illustrating components of the correction amount calculation unit 10. A control angle calculation unit 10a calculates a control angle α and the pulse number Pn on the basis of the modulation rate Kh* and the base number B.

A peak correction amount calculation unit 10b calculates the peak correction amount Am on the basis of the modulation rate.

A zero-cross correction amount calculation unit 10c calculates the zero-cross correction amount A1 on the basis of the pulse number Pn and the modulation rate Kh*.

Hitherto, the diagram of the configuration and the components of the first embodiment have been described. Next, an operation principle of a PWM control will be described.

The PWM control unit 15 acquires the values of the signal waves Vu*, Vv*, and Vw* at every half period of the carrier wave Vc* and compares the values with the carrier wave Vc* to determine "HIGH" or "LOW" of the gate signals Gun, Gup, Gvn, Gvp, Gwn, and Gwv. The inverter 2 outputs the pulse voltages Vu, Vv, and Vw to the alternating-current motor 1 according to "HIGH" or "LOW" of the gate signals Gun, Gup, Gvn, Gvp, Gwn, and Gwv. For example, since the signal wave Vu* is larger than the carrier wave Vc* in a section A' in a section A of FIG. 3, the gate signal Gup becomes high, the gate signal Gun becomes low, and the pulse voltage Vu is turned on. Therefore, one period of the carrier wave Vc* includes only one pulse of each of the pulse voltages Vu, Vv, and Vw. Hereinbelow, a waveform diagram of the pulse voltages Vu, Vv, and Vw and the voltage phase θ* is called a pulse pattern.

The PWM control includes a synchronous PWM control and an asynchronous PWM control. In the first embodiment, the description will be given about the synchronous PWM control. In the synchronous PWM control, zero-cross points at which the signs of the signal wave Vu* and the carrier wave Vc* are changed are matched as illustrated with "B" in FIG. 3. Therefore, the carrier frequency fc* is calculated to be an integer multiple of the fundamental wave frequency f1* by the frequency calculation unit 3. The pulse voltage Vu becomes a periodic wave with respect to a period T1 of the signal waves Vu*, Vv*, and Vw*. In addition, the carrier frequency fc* is calculated to satisfy (Mathematical Formula 1) to keep the pulse voltages Vu, Vv, and Vw symmetrical.

[Mathematical Formula 1]

$$f_c^* = 6P_n \pm 3 \le f_{cmax} \quad \cdots\cdots\cdots\cdots\cdots\cdots\cdots\cdots\cdots\cdots\cdots\cdots\cdots\cdots$$

(Mathematical Formula 1)

Herein, "Pn" represents a pulse number of each of the pulse voltages Vu, Vv, and Vw of one period of the fundamental wave. For example, the pulse number Pn of the pulse pattern illustrated in FIG. 3 (a) is nine pluses. In addition, "f$_{cmax}$" represents a maximum carrier frequency which can be subjected to the synchronous PWM control. For example, the maximum carrier frequency fc of a railway inverter is about several hundreds Hz, and the maximum carrier frequency fcmax of a general inverter is about several kHz. In a case where the PWM control is performed at the carrier frequency fc* higher than the maximum carrier frequency fcmax, the asynchronous PWM control is used. Hitherto, the operational principle of the PWM control has been described.

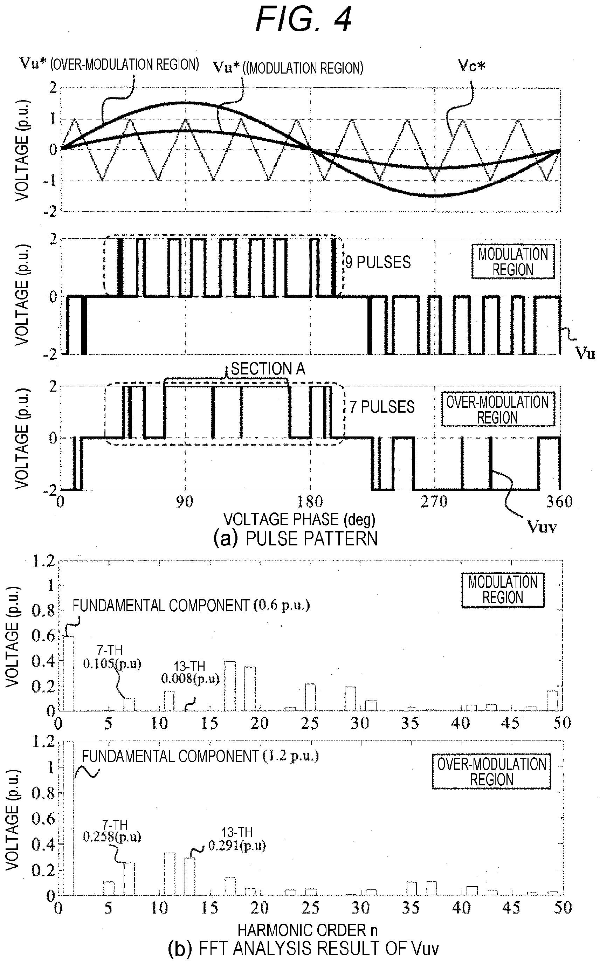

Next, the description will be given about a harmonic loss Wh which is a problem of the PWM control. In the PWM control, the voltage and the current are distorted according to the ON or OFF operation of the switching element of the inverter 2. The distortion can be expressed as a harmonic component illustrated in FIG. 3(b), and causes the harmonic loss Wh. In particular, when a motor is driven in an over-modulation region, the harmonic component and the harmonic loss Wh are increased apparently. The over-modulation region is a region where the modulation rate Kh* exceeds 1 (p.u.). A region where the modulation rate Kh* is less than 1 (p.u.) is called a modulation region. FIG. 4 illustrates a waveform diagram when the motor is driven in the over-modulation region (Kh = 1.24) and the modulation region (Kh = 0.6). As illustrated in FIG. 4 (a), the pulse number Pn (seven pulses) of the over-modulation region is less than the pulse number Pn (nine pulses) of the modulation region. This is because a magnitude of the signal wave Vu* near the voltage phase θ* = 90 deg illustrated in the section A of FIG. 4 (a) is larger than the amplitude (that is, 1 p.u.) of the carrier wave Vc*. As a result, an effective value of a harmonic voltage Vn is increased, and the harmonic loss Wh is also increased. For example, as illustrated in FIG. 4(b), a 7-th harmonic voltage Vn becomes the harmonic voltage Vn = 0.105 p.u. in a case where the motor is driven in the modulation region. On the other hand, in a case where the motor is driven in the over-modulation region, the effective value becomes the harmonic voltage Vn = 0.258 p.u., and becomes about two times compared to a case where the motor is driven in the modulation region. In addition, the effective value of a 13-th harmonic voltage Vn becomes 0.008 p.u. in a case where the motor is driven in the modulation region. In a case where the motor is driven in the over-modulation region, the effective value becomes 0.291 p.u., and becomes about 30 times compared to a case where the motor is driven in the modulation region. In this way, the amplitude of the signal wave exceeds the amplitude of the carrier wave in the over-modulation region, the effective value of the harmonic voltage Vn is increased apparently, and the harmonic loss Wh is also increased. Herein, the "harmonic voltage Vn" is an effective value of the harmonic component which is determined by the pulse pattern, depends on a phase α (hereinafter, the control angle α) where the pulse voltages Vu, Vv, and Vw are switched from on to off or from off to on, and is expressed as (Mathematical Formula 2).

[Mathematical Formula 2]

$$V_n = \frac{2}{n\pi}\left(\sum_n (-1)^n \cos n\alpha_n\right)^2 \quad \cdots\cdots\cdots\cdots\cdots$$

(Mathematical Formula 2)

Herein, "n" represents a harmonic number.

In addition, the modulation rate Kh* also depends on the control angle α, and expressed as (Mathematical Formula 3).

[Mathematical Formula 3]

$$K_h = \sum_{k=1}^{M} (-1)^k \cos n\alpha_k + 1 \;,\; M = \frac{P_n - 1}{2},\; 0 < \alpha_1 < \alpha_2 < \cdots < \alpha_M < 90$$

(Mathematical Formula 3)

Hitherto, the description has been given about the harmonic loss Wh which is a problem of the PWM control. Next, the description will be given about a conventional method of reducing the harmonic loss Wh of the over-modulation region.

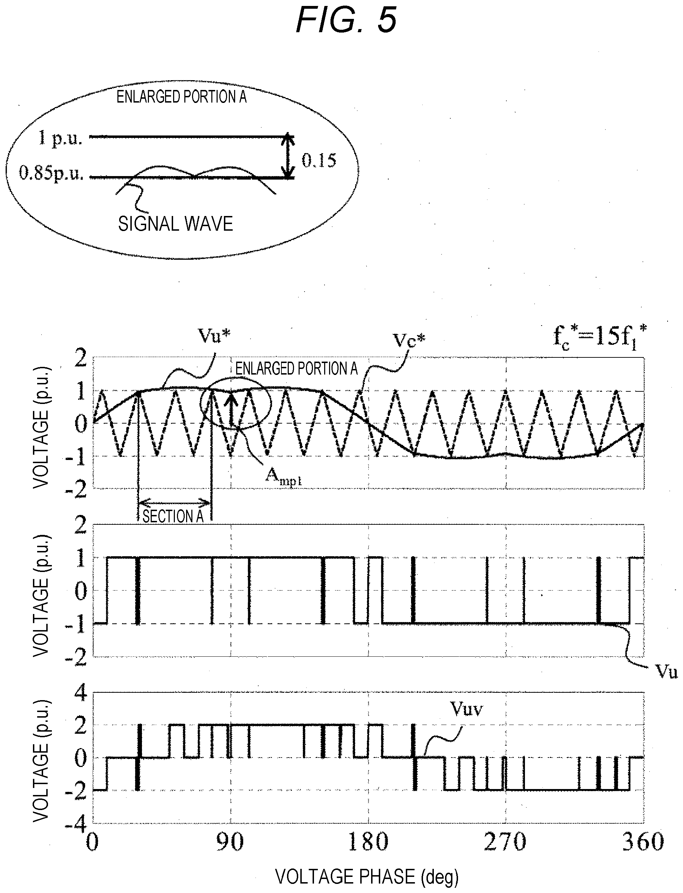

In the related art, there is used a 3rd harmonic superimposed system in which the harmonic component of three times the fundamental wave frequency f1* is superimposed on the signal waves Vu*, Vv*, and Vw*. With this regard, a system using a sinusoidal wave as the signal waves Vu*, Vv*, and Vw* is called a sinusoidal system. A waveform diagram of the 3rd harmonic superimposed system is illustrated in FIG. 5. The first amplitude Amp1 of the signal waves Vu*, Vv*, and Vw* in the 3rd harmonic superimposed system is calculated by (Mathematical Formula 4) on the basis of the modulation rate Kh*.

[Mathematical Formula 4]

$$A_{mp1} = K_h^* \times \frac{VDC}{2} - \frac{A_{max} + A_{min}}{2} \quad \cdots\cdots$$

(Mathematical Formula 4)

Herein, "Amax" represents a maximum amplitude, and "Amin" represents a minimum amplitude.

Since superimpose the harmonic component of three times the fundamental wave frequency f1*, the magnitudes of the signal waves Vu*, Vv*, and Vw* of the voltage phase $\theta^*$ = 90 deg become smaller than the amplitude (that is, 1 p.u.) of the carrier wave Vc* even in the over-modulation region. For example, as illustrated in an enlarged portion A of FIG. 5, in the case of the modulation rate Kh* = 1.15, the magnitude of the signal at the voltage phase $\theta^*$ = 90 deg is 0.85 p.u., and a difference with respect to the amplitude of the carrier wave Vc* becomes 0.15 p.u. Therefore, in the 3rd harmonic superimposed system, the effective value of the harmonic voltage Vn of the over-modulation region is reduced compared to the sinusoidal system. However, when the modulation rate Kh* exceeds 1.15, the magnitude of the signal wave in the section A of FIG. 5 becomes larger than the amplitude (that is, 1 p.u.) of the carrier wave Vc*. Therefore, the effective value of the harmonic voltage Vn is increased apparently, and the harmonic loss Wh is also increased. Hitherto, the description has been given about the conventional method of reducing the harmonic loss Wh of the modulation region. Next, the description will be given about a relation between the harmonic loss Wh and the harmonic voltage Vn.

The harmonic loss Wh is a total sum of an eddy current generated in a magnet of the alternating-current motor 1 and a hysteresis loss caused in an electromagnetic steel plate, and is proportional to a square of a harmonic current In. Herein, the harmonic current In may be expressed as (Mathematical Formula 5) using the harmonic voltage Vn of (Mathematical Formula 2).

[Mathematical Formula 5]

$$I_n = \frac{V_n}{Z} = \frac{V_n}{2\pi f_1 L n} \propto \frac{V_n}{n} \quad \cdots\cdots\cdots\cdots\cdots$$

(Mathematical Formula 5)

Herein, "Z" represents an impedance of the alternating-current motor 1, and "L" represents an inductance of the alternating-current motor 1.

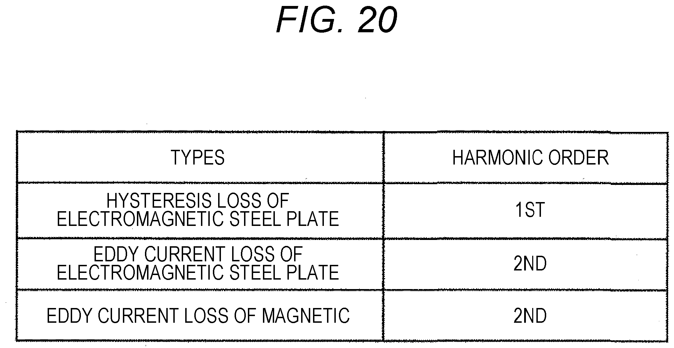

In addition, the harmonic loss Wh is proportional to a factorial of the frequency as illustrated in FIG. 20 which shows a frequency dependency of the harmonic loss, and is expressed as (Mathematical Formula 6).

[Mathematical Formula 6]

$$W_h = \sum_n I_n^2 n^\lambda \propto \sum_n V_n^2 n^{\lambda-2} \quad \cdots\cdots\cdots\cdots$$

(Mathematical Formula 6)

Herein, "$\lambda$" represents a loss coefficient.

Substituting (Mathematical Formula 2) into (Mathematical Formula 6), (Mathematical Formula 7) is obtained, and the harmonic loss Wh is expressed by the control angle $\alpha$.

[Mathematical Formula 7]

$$W_h \propto \sum_n V_n^2 n^{\lambda-2} = \frac{4}{\pi^2} \sum_n \left( \sum_n (-1)^n \cos n\alpha_n \right)^2 n^{\lambda-4} \quad \cdots\cdots$$

(Mathematical Formula 7)

Herein, the loss coefficient $\lambda$ is a coefficient representing a characteristic of the harmonic loss Wh of the alternating-current motor 1, and is defined by a factor (FIG. 20) of the harmonic loss Wh of the alternating-current motor 1 as follows.

(1) $\lambda = 0$: No frequency dependency, and copper loss is a cause,
(2) $\lambda = 1$: Hysteresis loss is a main cause, and
(3) $\lambda = 2$: Eddy current loss is a main cause.

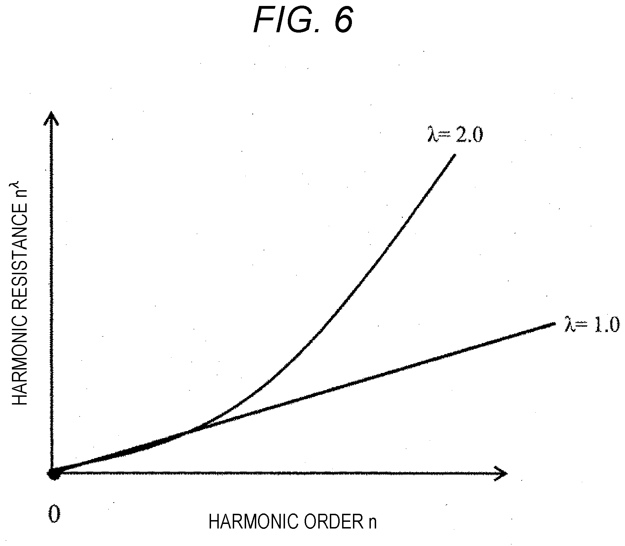

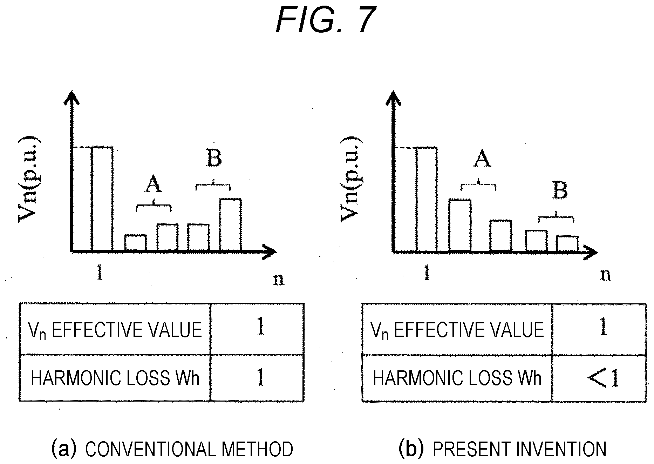

Therefore, the loss coefficient $\lambda$ becomes a value of 0 or more and 2 or less. For example, in a case where the main cause of the harmonic loss Wh is the hysteresis loss and the copper loss, the loss coefficient $\lambda$ falls within $0 \leq \lambda \leq 1$. In a case where the loss coefficient $\lambda$ is "0, " the harmonic current In and the harmonic loss Wh have a proportional relation since the harmonic loss Wh has no frequency dependency. Therefore, the harmonic current In is reduced by reducing the harmonic voltage Vn and, as a result, the harmonic loss Wh is reduced. However, in a case where the harmonic loss Wh has the frequency dependency, a harmonic resistance $n^\lambda$ and the harmonic number n have a relation illustrated in FIG. 6 since the loss coefficient $\lambda$ is larger than "0." In other words, the harmonic resistance $n^\lambda$ becomes large as the order of the harmonic number n is increased, and thus the harmonic voltage Vn of an order higher than the low-order harmonic voltage Vn affects an influence on the harmonic loss Wh. Therefore, the harmonic loss Wh can be significantly reduced by reducing the high-order harmonic voltage Vn illustrated in B of FIG. 7 even when the low-order harmonic voltage Vn illustrated in A of FIG. 7 is allowed to be increased. In other words, there is a need to reduce the effective value of the high-order harmonic voltage Vn in accordance with the loss coefficient $\lambda$.

Next, an optimization of the pulse pattern will be described. Since the pulse pattern is determined in consideration of the frequency dependency of the harmonic loss Wh, (Mathematical Formula 7) is set as a target function of the optimization, and the control angle $\alpha$ is calculated to reduce or minimize the loss. Herein, in (Mathematical Formula 3), the modulation rate Kh* acts as a constraint condition of the optimization due to the influence of the control angle $\alpha$. In the embodiment, the modulation rate Kh* of the constraint condition is fixed to 1.2.

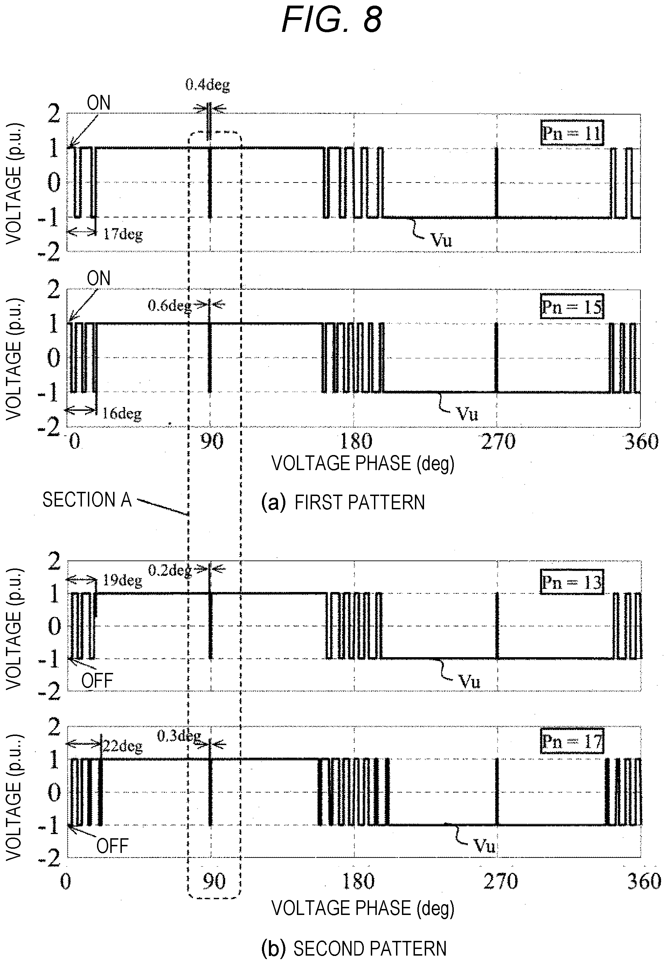

FIG. 8 illustrates the pulse pattern which is optimized with the loss coefficient $\lambda = 0.5$. These pulse patterns have the characteristics as follows.

(a) The optimized pulse pattern includes a pattern in which the pulse voltage Vu is turned on at the voltage phase $\theta^* = 0$ deg as illustrated in FIG. 8(a), and a pattern in which the pulse voltage Vu is turned off at the voltage phase $\theta^* = 0$ deg as illustrated in FIG. 8(b). Hereinbelow, the former is called a first pattern, and the latter is called a second pattern.
(b) The optimal pulse pattern is turned off within $\pm 0.6$ deg from the voltage phase $\theta^* = 90$ deg as illustrated in the section A of FIG. 8.
(c) In the optimized pulse pattern, the pulse voltage Vu is turned on and off within $\pm 22$ deg from the voltage phase $0^* = 0$ deg.
(d) At the voltage phase $\theta^*$ other than (a) to (c), the pulse voltage Vu is kept on or off.

The following restrictions are necessary in order to mount the optimized pulse pattern in the PWM control.

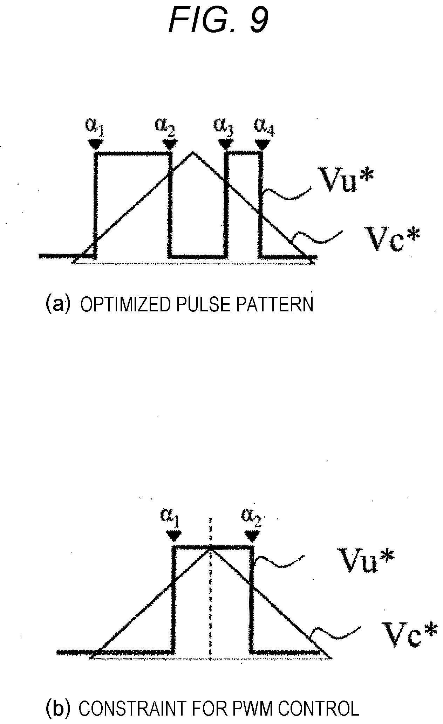

(A) In the optimized pulse pattern, two or more control angles $\alpha$ are disposed in one period of the carrier wave Vc* as illustrated in FIG. 9 (a), and are not symmetrically disposed with respect to the carrier wave Vc*. Therefore, as illustrated in FIG. 9(b), two control angles $\alpha$ are disposed in one period of the carrier wave Vc*, and are necessarily disposed symmetrically with respect to the carrier wave Vc*.
(B) While under the restriction of (A), the pulse number Pn is not changed even when the modulation rate Kh* is increased.

Hitherto, the description has been given about the optimization of the pulse pattern.

In the embodiment, the synchronous correction signal A is generated using the frequency correction unit 4, the correction amount calculation unit 10, the synchronous correction phase calculation unit 12, and the correction signal generation unit 13, and the pulse pattern holding the above characteristics (a) to (d) and the restrictions (A) and (B) is output to the inverter 2. Hereinbelow, the principle will be described.

With the characteristic (a), the carrier wave Vc* receives the restriction of (Mathematical Formula 8) in the case of the first pattern (the pattern P = 1), and receives the restriction of (Mathematical Formula 9) in the case of the second pattern (the pattern P = 2). In addition, with the characteristic (b), the carrier wave Vc* receives the restriction of (Mathematical Formula 10).

[Mathematical Formula 8]

$$V_c^*(0) = -1 \quad \ldots\ldots\ldots\ldots\ldots\ldots\ldots\ldots\ldots$$

(Mathematical Formula 8)

[Mathematical Formula 9]

$$V_c^*(0) = 0 \quad \ldots\ldots\ldots\ldots\ldots\ldots\ldots\ldots\ldots\ldots$$

(Mathematical Formula 9)

[Mathematical Formula 10]

$$V_c^*(90) = 1 \quad \ldots\ldots\ldots\ldots\ldots\ldots\ldots\ldots\ldots$$

(Mathematical  Formula 10)

The frequency correction unit 4 calculates the correction signal fc2* on the basis of the base number B and the pattern P so as to satisfy the restriction of (Mathematical Formula 8) or (Mathematical Formula 9), (Mathematical Formula 10), and (Mathematical Formula 1).

The pulse voltage Vu keeps (b) to (d) while satisfying the restrictions (A) and (B). In order to keep the characteristic, the zero holding phase $\beta_0$ is calculated on the basis of (Mathematical Formula 11).

[Mathematical Formula 11]

$$\beta_0 = \frac{180}{2B_2} \quad \ldots\ldots\ldots\ldots\ldots\ldots\ldots\ldots$$

(Mathematical Formula 11)

Herein, a correction base number B2 is a ratio of the corrected carrier frequency fc2* to the fundamental wave frequency f1*.

In addition, the zero-cross phase $\beta$1 is calculated on the basis of (Mathematical Formula 12) or (Mathematical Formula 13) .

[Mathematical Formula 12]

$$\beta_1(P) = \beta_0 + \frac{180}{2B_2} \times \left( \frac{P_n+1}{4} - 1 \right), P = 1 \quad \ldots\ldots\ldots\ldots\ldots\ldots$$

(Mathematical Formula 12)

[Mathematical Formula 13]

$$\beta_1(P) = \beta_0 + \frac{180}{2B_2} \times \left( \frac{P_n-1}{4} - 1 \right), P = 2 \quad \ldots\ldots\ldots\ldots\ldots\ldots$$

(Mathematical Formula 13)

The peak phase β2 is calculated by (Mathematical Formula 14).
[Mathematical Formula 14]

$$\beta_2 = 90 - \frac{180}{B_2} \quad \dots\dots\dots\dots\dots\dots\dots\dots\dots$$

(Mathematical Formula 14)

In a case where the modulation rate Kh* is larger than 1.22, the peak correction amount A1 is calculated by (Mathematical Formula 15) on the basis of the modulation rate Kh*. In a case where the modulation rate Kh* is smaller than 1.22, the peak correction amount A1 is calculated by (Mathematical Formula 16) on the basis of the control angle α without depending on the modulation rate Kh*. Herein, the control angle α is a value which is optimized to reduce or minimize the harmonic loss Wh on the basis of (Mathematical Formula 7).
[Mathematical Formula 15]

$$A_1 = A_1(K_h^*) \quad \dots\dots\dots\dots\dots\dots\dots\dots$$

(Mathematical Formula 15)

[Mathematical Formula 16]

$$A_1 = A_1(\alpha) \quad \dots\dots\dots\dots\dots\dots\dots\dots\dots$$

(Mathematical Formula 16)

The synchronous correction signal A is generated to satisfy (Mathematical Formula 17).
[Mathematical Formula 17]

$$A(0 \le \theta^* \le \beta_0) = 0$$
$$A(\beta_0 < \theta^* \le \beta_1) = A_1$$
$$A(\beta_1 < \theta^* \le \beta_2) = 1 \quad \dots\dots\dots\dots\dots$$
$$A(\beta_2 < \theta^* \le 90) = A_m$$

(Mathematical Formula 17)

The synchronous correction signal A when the voltage phase θ* is 90 - 360 (deg) is determined by the symmetry of the waveform.

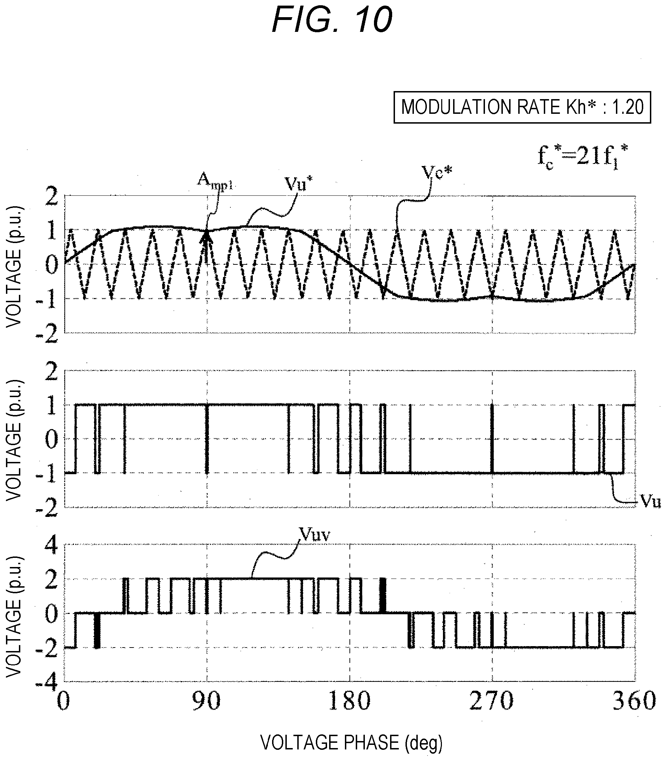

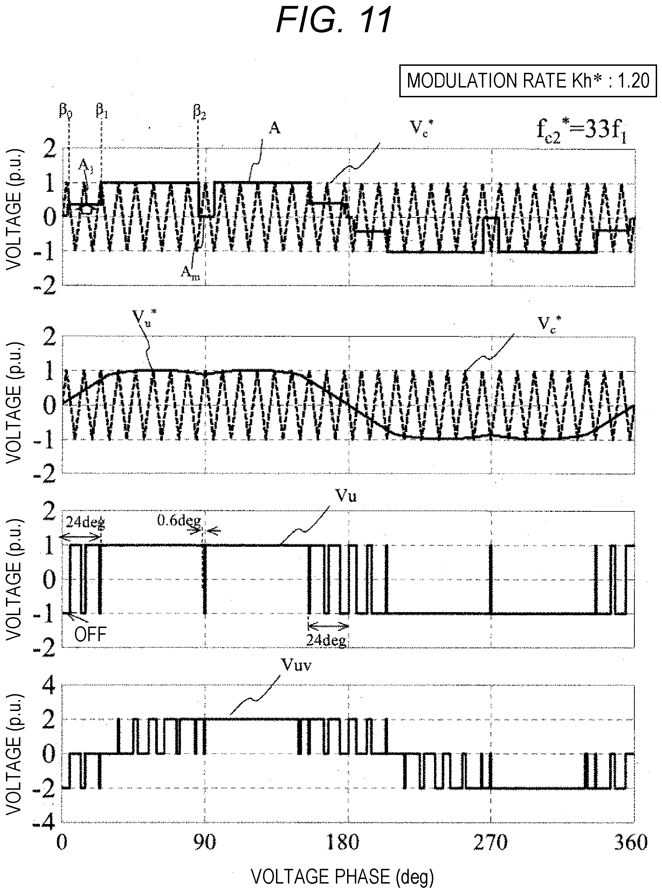

FIG. 10 illustrates a waveform diagram of the 3rd harmonic superimposed system in which the carrier frequency fc* = 1050 Hz, the fundamental wave frequency f1* = 50 Hz, the modulation rate Kh* = 1.2, the pulse number Pn per one period = 13, and the base number B = 21. The pulse pattern of the invention which is corrected on the basis of this pulse pattern is illustrated in FIG. 11. The parameters of the pulse patterns after correction illustrated in FIG. 11 are as follows.
- Corrected carrier frequency fc2* = 33 × f1*
- Peak correction amount Am = 0
- Zero-cross correction amount A1 = 0.1
- Pulse number Pn = 13

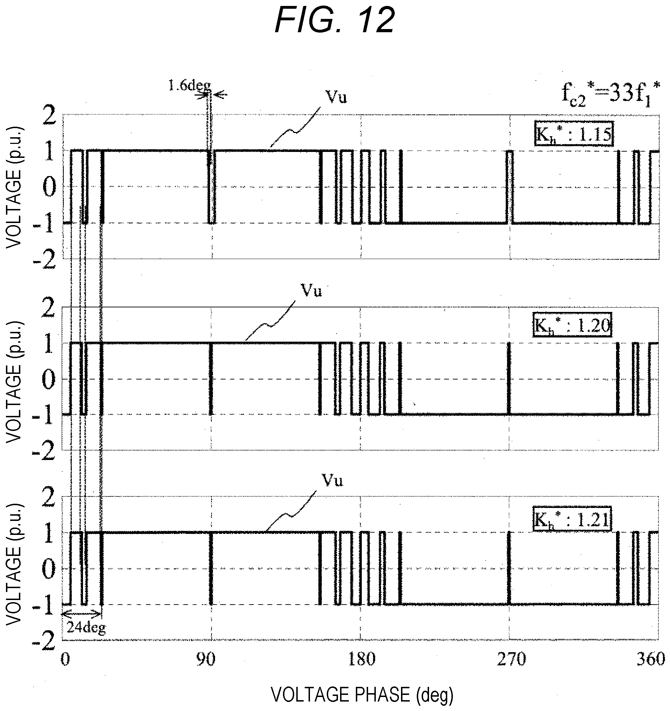

FIG. 12 illustrates the pulse pattern when the modulation rate Kh* of the pulse pattern illustrated in FIG. 11 is changed up to 1.15 - 1.21. These pulse patterns have the following characteristics.

- In a range that the modulation rate Kh* falls within 1.15 - 1.21, the control angles α of the pulse voltage Vu near the voltage phase θ* = 0 deg are equal.
- In a range that the modulation rate Kh* falls within 1.15 - 1.21, the pulse voltage Vu near the voltage phase θ* = 0 deg is turned on and turned off within 24 deg. Herein, in all the pulse patterns designed in the first embodiment, the pulse voltage Vu near the voltage phase θ* = 0 deg is turned on and off within an electric angle of 38 deg.
- In a range that the modulation rate Kh* falls within 1.15 - 1.21, the pulse voltage Vu near the voltage phase θ* = 90 deg is turned off within 1.6 deg according to the change of the modulation rate Kh*. Herein, in all the pulse patterns designed in the first embodiment, the pulse voltage Vu near the voltage phase θ* = 90 deg is turned off within 5 deg.

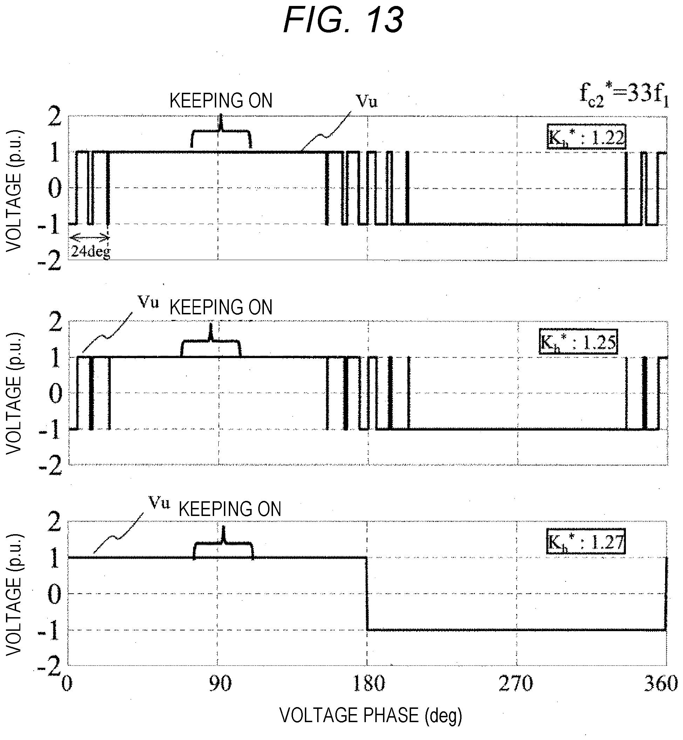

The pulse pattern in a case where the modulation rate Kh* is larger than 1.22 is illustrated in FIG. 13. In the embodiment, in a case where the modulation rate Kh* is larger than 1.22, the pulse voltage Vu near the voltage phase θ* = 90 deg is necessarily kept on. Therefore, the peak correction amount Am is set to "1."

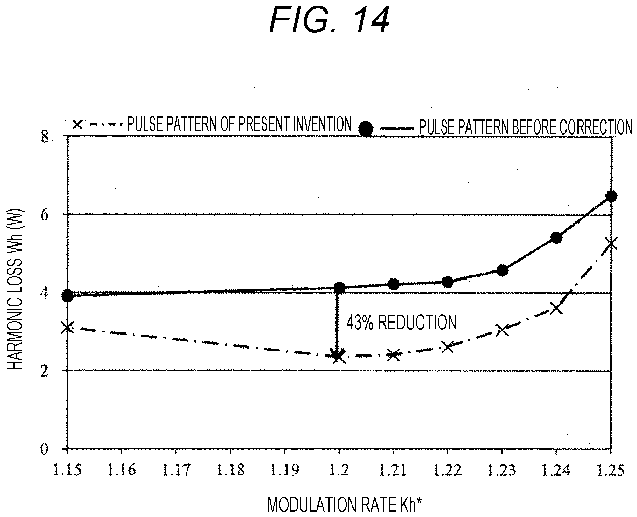

The effect of the embodiment is illustrated in FIG. 14. Herein, the harmonic loss Wh is calculated as the loss coefficient λ = 0.5 on the basis of (Mathematical Formula 7) . In addition, when the harmonic number n is larger than "200, " the harmonic loss is assumed as "0." As illustrated in FIG. 14, the pulse pattern of the invention can reduce the harmonic loss Wh compared to the pulse pattern before correction, and the reduced amount is 43% at maximum.

Second Embodiment

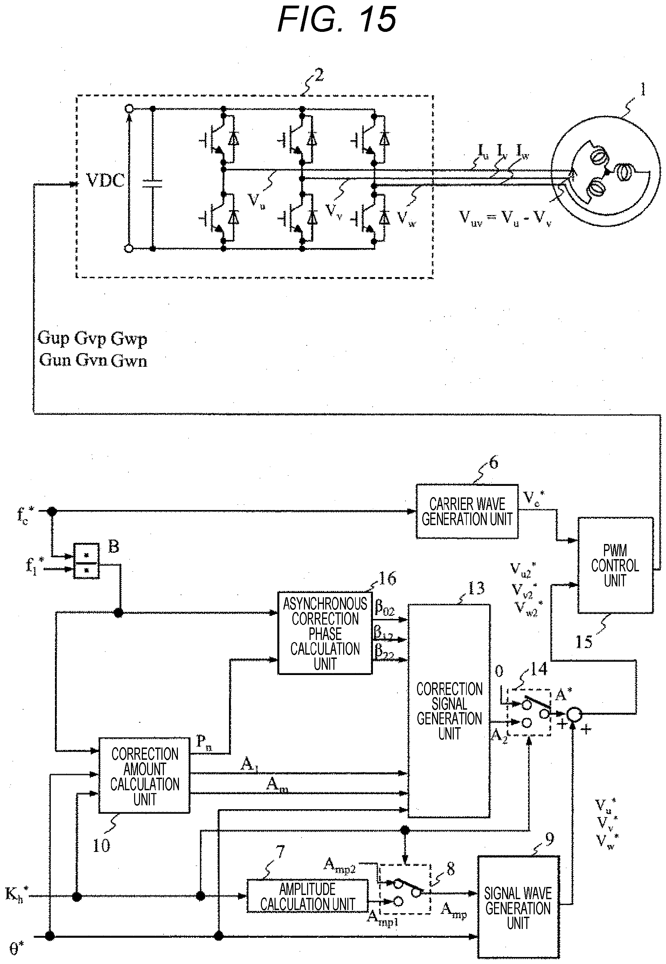

FIG. 15 is a diagram illustrating a configuration of a second embodiment, and FIG. 20 illustrates its components. However, the same components as those of the first embodiment will be omitted.

A carrier wave generation unit 3 outputs the carrier wave Vc* on the basis of the carrier frequency fc*. An asynchronous correction phase calculation unit 16 calculates a second zero holding phase β02, a second zero-cross phase β12, and a second peak phase β22 on the basis of the base number B and the pulse number Pn.

The correction signal generation unit 13 generates an asynchronous correction signal A2 on the basis of the second zero holding phase β02, the second zero-cross phase β12, the second peak phase β22, the zero-cross correction amount A1, the peak correction amount Am, and the voltage phase θ*.

Hitherto, the description has been given about the configuration of the second embodiment. Next, the content of the second embodiment will be described.

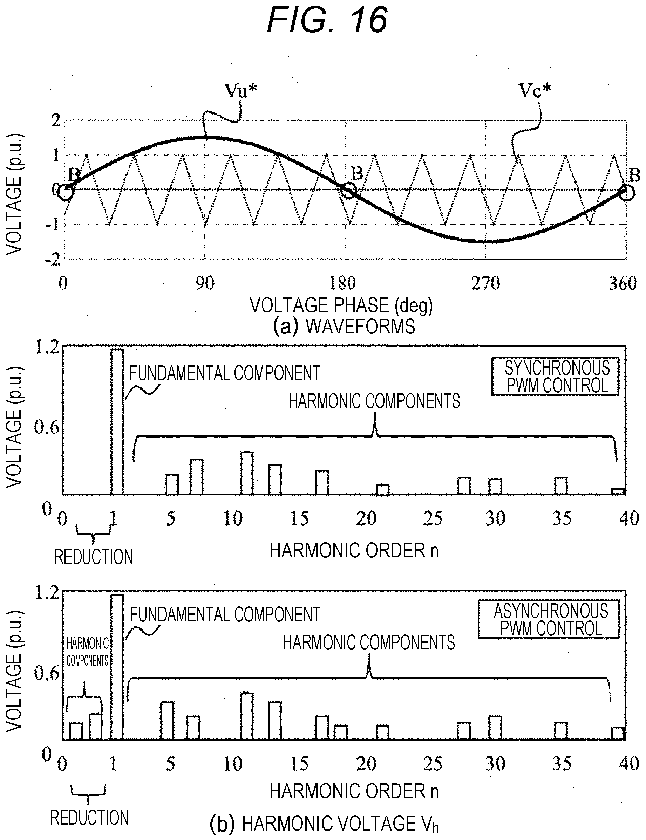

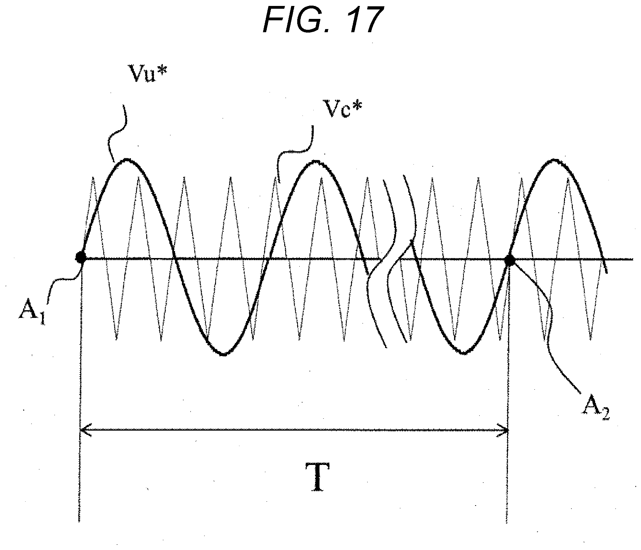

In the second embodiment, the harmonic loss of the over-modulation region in the asynchronous PWM control is reduced. In the asynchronous PWM control, the carrier frequency fc* is fixed regardless of the fundamental wave frequency f1*. Therefore, the zero-cross points at which the signs of the carrier wave Vc* and the signal wave Vu* are switched are not matched as illustrated in B of FIG. 16. In the asynchronous PWM control, the waveform of the pulse voltage Vu becomes an aperiodic waveform with respect to the period T1 of the signal since the zero-cross points of the signal wave Vu* and the carrier wave Vc* are not matched. However, as illustrated in FIG. 17, the waveform becomes a periodic waveform with respect to a period T which is a least common multiple of the period T1 of the signal wave and a period Tc of the carrier wave. Therefore, in the second embodiment, the harmonic voltage Vn is obtained by (Mathematical Formula 18) with a least common period T as a reference.

[Mathematical Formula 18]

$$V_n = \frac{2}{\pi}\sqrt{\left(\sum_{n=\frac{1}{T}}\left((-1)^n \cos n\alpha_n\right)n\right)^2 + \left(\sum_{n=\frac{1}{T}}\left((-1)^n \sin n\alpha_n\right)n\right)^2} \quad \dots\dots\dots$$

(Mathematical Formula 18)

Therefore, in the asynchronous PWM control, the harmonic component is generated even in a region lower than that of a fundamental component as illustrated in FIG. 16(b). The control angle α is calculated to reduce or minimize (Mathematical Formula 19) which is obtained by substituting (Mathematical Formula 18) into (Mathematical Formula 6).

In addition, the modulation rate Kh* which is the constraint condition of (Mathematical Formula 19 is fixed to 1.2 in calculation.

[Mathematical Formula 19]

$$W_h \propto \sum_{\frac{1}{T}<n<H} V_n^2 n^{\lambda-2} = \frac{4}{\pi^2} \sum_{\frac{1}{T}<n<H} \frac{2}{\pi} \left( \sum_{n=\frac{1}{T}} \left((-1)^n \cos n\alpha_k \right) n \right)^2 + \left( \sum_{n=\frac{1}{T}} \left((-1)^k \sin n\alpha_k \right) n \right)^2 n^{\lambda-4}$$

(Mathematical Formula 19)

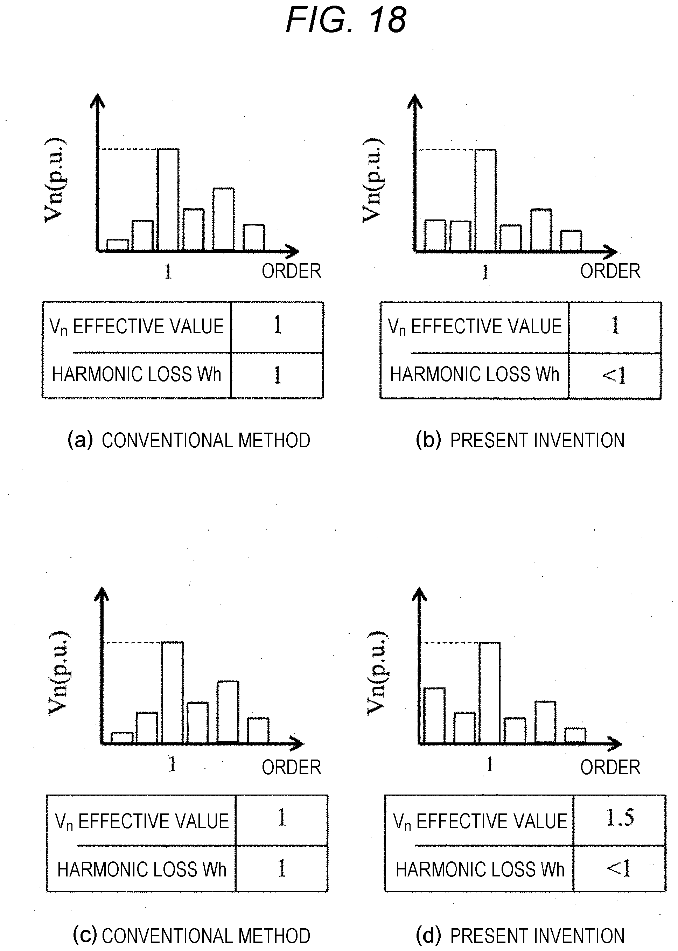

FIG. 18 illustrates the effect of the second embodiment. In FIGS. 18(a) and 18(b), in the conventional method and the invention, the harmonic loss Wh can be reduced regardless of the fact that the effective values of the voltage harmonic Vn are equal. In addition, in FIGS. 18(c) and 18(d), the harmonic loss Wh can be reduced regardless of the fact that the effective value of the voltage harmonic Vn is increased.

Third Embodiment

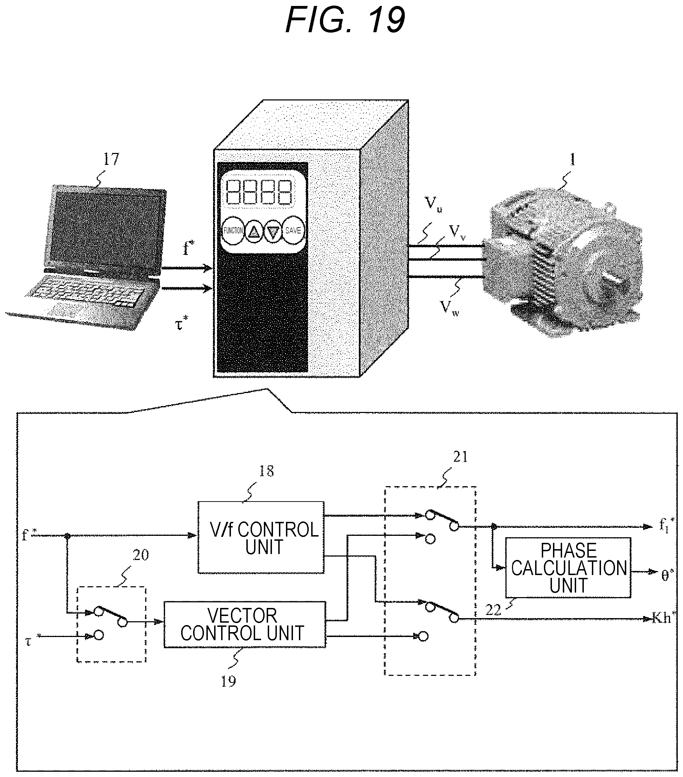

FIG. 19 is a diagram illustrating a configuration of a third embodiment, in which the first or second embodiment is mounted in the drive system to drive the alternating-current motor 1.

In the third embodiment, a host device such as a computer 17 outputs a torque command $\tau^*$ or a frequency command f*.

A V/f control unit 18 and a vector control unit 19 calculate the fundamental wave frequency f1* and the modulation rate Kh* on the basis of the torque command $\tau^*$ or the frequency command f*.

A control mode changing unit 20 switches the torque command $\tau^*$ and the frequency command f*. A control selection unit 21 switches the V/f control unit 18 and the vector control unit 19.

A phase calculation unit 22 calculates the voltage phase $\theta^*$ on the basis of the fundamental wave frequency f1*. The fundamental wave frequency f1*, the voltage phase $\theta^*$, and the modulation rate Kh* calculated in the third embodiment are output to the motor control device of the first or second embodiment to drive the alternating-current motor 1.

According to the embodiment, the torque command $\tau^*$ or the frequency command f*, and the vector control unit 19 or the V/f control unit 18 may be set arbitrarily as an instruction value.

Reference Signs List

1 alternating-current motor
2 inverter
3 frequency calculation unit
4 frequency correction unit
5 first modulation mode determination unit
6 carrier wave generation unit
7 amplitude calculation unit
8 second modulation mode determination unit
9 signal wave generation unit
10 correction amount calculation unit
10a control angle calculation unit
10b peak correction amount calculation unit
10c zero-cross corrected amount calculation unit
11 pattern determination unit
12 synchronous correction phase calculation unit
13 correction signal generation unit
14 third modulation mode determination unit
15 PWM control unit
16 asynchronous correction phase calculation unit

17 computer
18 V/f control unit
19 vector control unit
20 control mode switching unit
21 control selection unit
22 phase calculation unit
VDC DC voltage
Vu, Vv, Vw U-phase pulse voltage, V-phase pulse voltage,
W-phase pulse voltage
Iu, Iv, Iw U-phase current, V-phase current, W-phase current
Vu*, Vv*, Vw* U-phase signal wave, V-phase signal wave, W-phase signal wave
Vu2*, Vv2*, Vw2* U-phase correction signal wave, V-phase correction signal wave, W-phase correction signal wave
Vuv line voltage
Vc* carrier wave
P pattern
A synchronous correction signal
A* final correction signal
A1 zero-cross correction amount
Am peak correction amount
Vn harmonic voltage
Guu, Gup U-phase gate signal
Gvu, Gvp V-phase gate signal
Gwu, Gwp W-phase gate signal
$\theta$* voltage phase
f* frequency command
$\tau$* torque command
Kh* modulation rate
f1* fundamental wave frequency
fc** final carrier wave frequency
fc* carrier wave frequency
fc2* corrected carrier wave frequency
Tc carrier wave period
T1 signal wave period
T least common period of carrier wave and signal wave
In harmonic current
Z impedance of alternating-current motor
L inductance of alternating-current motor
$\lambda$ loss coefficient
n harmonic number
Wh harmonic loss
$\alpha$ control angle
$\beta$0 zero holding phase
$\beta$1 zero-cross phase
$\beta$2 peak phase
$\beta$02 second zero holding phase
$\beta$12 second zero-cross phase
$\beta$22 second peak phase
Amp1 first amplitude
Amp2 fixed amplitude
Amp final amplitude
fcmax maximum carrier frequency
Pn pulse number

**Claims**

1. A motor control device including:

an amplitude calculation unit (7), which is configured to calculate a first amplitude ($A_{mp1}$) on the basis of a modulation rate ($K_h^*$) normalized by a DC voltage;

a signal wave generation unit (9), which is configured to generate a signal wave ($V_u^*$, Vv*, Vw*) on the basis of a voltage phase ($\theta^*$) and the first amplitude ($A_{mp1}$);

a frequency calculation unit (3), which is configured to calculate a base number (B) and a carrier frequency ($f_c^*$) on the basis of a fundamental wave frequency ($f_1^*$);

a carrier wave generation unit (6), which is configured to generate a carrier wave ($V_c^*$) on the basis of the carrier frequency;

a PWM control unit (15), which is configured to compare the signal wave ($V_u^*$, Vv*, Vw*) and the carrier wave ($V_c^*$), and outputs a gate signal (Gun, Gup, Gvn, Gvp, Gwn, Gwv); and

an inverter (2), which is configured to control a switching element on the basis of the gate signal, and outputs a pulse voltage (Vu, Vv, Vw), the motor control device comprising:

a frequency correction unit (4), which is configured to calculate a corrected carrier frequency ($f_{c2}^*$) on the basis of the base number (B) which is a ratio of the carrier frequency ($f_c^*$) to the fundamental wave frequency ($f_1^*$), and a pattern (P);

a pattern determination unit (11), which is configured to calculate the pattern (P) on the basis of the base number (B) ;

a first modulation mode determination unit (5), which is configured to switch a final carrier frequency ($f_c^{**}$) from the carrier frequency ($f_c^*$) to the corrected carrier frequency ($f_{c2}^*$) in a case where the modulation rate ($K_h^*$) reaches a predetermined value equal to or greater than one;

a correction amount calculation unit (10), which is configured to calculate a pulse number ($P_n$), a zero-cross correction amount ($A_1$), and a peak correction amount ($A_m$) on the basis of the modulation rate ($K_h^*$) , the voltage phase ($\theta^*$) , and the base number (B);

a synchronous correction phase calculation unit (12), which is configured to calculate a zero holding phase ($\beta_0$), a zero-cross phase ($\beta_1$), and a peak phase ($\beta_2$) on the basis of the pulse number ($P_n$), the corrected carrier frequency ($f_{c2}^*$), the pattern (P), and the fundamental wave frequency ($f_1^*$);

a correction signal generation unit (13), which is configured to generate a synchronous correction signal (A) on the basis of the zero holding phase ($\beta_0$), the zero-cross phase ($\beta_1$), the peak phase ($\beta_2$), the peak correction amount ($A_m$), the zero-cross correction amount ($A_1$), and the voltage phase ($\theta^*$);

a second modulation mode determination unit (8), which is configured to switch a final amplitude ($A_{mp}$) from the first amplitude ($A_{mp1}$) to a fixed amplitude ($A_{mp2}$) in a case where the modulation rate ($K_h^*$) reaches a predetermined value equal to or greater than one; and

a third modulation mode determination unit (14), which is configured to switch a final correction signal wave (A*) from zero to the synchronous correction signal (A) in a case where the modulation rate ($K_h^*$) reaches a predetermined value equal to or greater than one.

2. The motor control device according to claim 1,

wherein the correction amount calculation unit is configured to include

a control angle calculation unit (10a), which is configured to calculate the pulse number ($P_n$) and the control angle ($\alpha$) to reduce or minimize a harmonic loss of the following mathematical formula on the basis of the modulation rate and the base number,

a second pattern determination unit, which is configured to determine the pattern on the basis of the base number,

a zero-cross correction amount calculation unit (10c), which is configured to calculate the zero-cross correction amount ($A_1$) on the basis of the pulse number ($P_n$), the control angle ($\alpha$), and the modulation rate ($K_h^*$), and

a peak correction amount calculation unit (10b), which is configured to calculate the peak correction amount ($A_m$) on the basis of the modulation rate ($K_h^*$).

[Mathematical Formula 1]

$$W_h \propto \sum_n V_n^2 n^{\lambda-2} = \frac{4}{\pi^2} \sum_n \left( \sum_n (-1)^k \cos n\alpha_k \right)^2 n^{\lambda-4}$$

(where, "λ" is a loss coefficient, "n" is a harmonic number, and "Vn" is a harmonic voltage)

3. The motor control device according to claim 1,

wherein the zero-cross correction phase is calculated to turn on and off the pulse voltage within $\pm 38$ deg from each of the voltage phases 0 and 180 deg, and
the peak correction phase is calculated to be turned off within $\pm 5$ deg from each of the voltage phases 90 and 270 deg.

4. The motor control device according to claim 1,

wherein, in a case where the modulation rate is smaller than 1.22, the zero-cross correction amount is calculated regardless of the modulation rate even when the modulation rate is changed, and
the zero-cross correction amount is calculated such that a timing of turning the pulse voltage on and off is matched in a region within $\pm 38$ deg from each of the voltage phases 0 and 180 deg.

5. The motor control device according to claim 1,
wherein, in a case where the modulation rate is smaller than 1.22, the peak correction amount is calculated such that the pulse voltage is turned off within $\pm 5$ deg from each of the voltage phases 90 and 270 deg on the basis of the modulation rate.

6. The motor control device according to claim 1,

wherein, in a case where the modulation rate is larger than 1.22, the zero-cross correction amount is calculated on the basis of the modulation rate, and
the peak correction amount is set to 1.

7. A motor drive system, comprising:

the motor control device according to any one of claims 1 to 6;
a vector control unit (19) and a V/f control unit (18), which are configured to calculate the fundamental wave frequency ($f_1$*) and the modulation rate ($K_h$*) on the basis of a torque command ($\tau$*) or a frequency command (f*);
a control selection unit (21), which is configured to switch the vector control unit and the V/f control unit;
a control mode switching unit (20), which is configured to switch the torque command and the frequency command; and
a phase calculation unit (22), which is configured to calculate the voltage phase on the basis of the fundamental wave frequency.

**Patentansprüche**

1. Motorsteuervorrichtung, die Folgendes umfasst:

eine Amplitudenberechnungseinheit (7), die ausgelegt ist, um eine erste Amplitude ($A_{mp1}$) auf Basis einer durch eine Gleichspannung normalisierte Modulationsrate ($K_h$*) zu berechnen;
eine Signalwellenerzeugungseinheit (9), die ausgelegt ist, um eine Signalwelle ($V_u$*, Vv*, Vw*) auf Basis einer Spannungsphase ($\theta$*) und der ersten Amplitude ($A_{mp1}$) zu erzeugen;
eine Frequenzberechnungseinheit (3), die ausgelegt ist, um eine Basiszahl (B) und eine Trägerfrequenz ($f_c$*) auf Basis einer Grundwellenfrequenz ($f_1$*) zu berechnen;
eine Trägerwellenerzeugungseinheit (6), die ausgelegt ist, um eine Trägerwelle ($V_c$*) auf Basis der Trägerfrequenz zu erzeugen;
eine PWM-Steuereinheit (15), die ausgelegt ist, um die Signalwelle ($V_u$*, Vv*, Vw*) mit der Trägerwelle ($V_c$*) zu vergleichen, und ein Gate-Signal ausgibt (Gun, Gup, Gvn, Gvp, Gwn, Gwv); und
einen Wechselrichter (2), der ausgelegt ist, um ein Schaltelement auf Basis des Gate-Signals zu steuern, und eine Impulsspannung (Vu, Vv, Vw) ausgibt, wobei die Motorsteuervorrichtung Folgendes umfasst:

eine Frequenzkorrektureinheit (4), die ausgelegt ist, um eine korrigierte Trägerfrequenz ($f_{c2}$*) auf Basis der Basiszahl (B), die ein Verhältnis der Trägerfrequenz ($f_c$*) zu der Grundwellenfrequenz ($f_1$*) darstellt, und

eines Musters (P) zu berechnen;

eine Musterbestimmungseinheit (11), die ausgelegt ist, um das Muster (P) auf Basis der Basiszahl (B) zu berechnen;

eine erste Modulationsmodus-Bestimmungseinheit (5), die ausgelegt ist, um eine finale Trägerfrequenz (fc\*\*) von der Trägerfrequenz ($f_c$\*) auf die korrigierte Trägerfrequenz ($f_{c2}$\*) umzuschalten, wenn die Modulationsrate ($K_h$\*) einen vorbestimmten Wert gleich oder größer als eins erreicht;

eine Korrekturausmaß-Berechnungseinheit (10), die ausgelegt ist, um eine Impulszahl ($P_n$), ein Nulldurchgang-Korrekturausmaß ($A_1$) und ein Peak-Korrekturausmaß ($A_m$) auf Basis der Modulationsrate ($K_h$\*), der Spannungsphase ($\theta$\*) und der Basiszahl (B) zu berechnen;

eine synchrone Korrekturphasen-Berechnungseinheit (12), die ausgelegt ist, um eine Nullhaltephase ($\beta_0$), eine Nulldurchgangphase ($\beta_1$) und eine Peak-Phase ($\beta_2$) auf Basis der Impulszahl ($P_n$), der korrigierten Trägerfrequenz ($f_{c2}$\*), des Musters (P) und der Grundwellenfrequenz ($f_1$\*) zu berechnen;

eine Korrektursignal-Erzeugungseinheit (13), die ausgelegt ist, um ein synchrones Korrektursignal (A) auf Basis der Nullhaltephase ($\beta_0$), der Nulldurchgangphase ($\beta_1$), der Peak-Phase ($\beta_2$), des Peak-Korrekturausmaßes ($A_m$), des Nulldurchgang-Korrekturausmaßes ($A_1$) und der Spannungsphase ($\theta$\*) zu erzeugen;

eine zweite Modulationsmodus-Bestimmungseinheit (8), die ausgelegt ist um eine finale Amplitude ($A_{mp}$) von der ersten Amplitude ($A_{mp1}$) zu einer festen Amplitude ($A_{mp2}$) zu schalten, wenn die Modulationsrate ($K_h$\*) einen vorbestimmten Wert gleich oder größer als eins erreicht; und

eine dritte Modulationsmodus-Bestimmungseinheit (14), die ausgelegt ist, um eine finale Korrektursignalwelle (A\*) von null auf das synchrone Korrektursignal (A) umzuschalten, wenn die Modulationsrate ($K_h$\*) einen vorbestimmten Wert gleich oder größer als eins erreicht.

**2.** Motorsteuervorrichtung nach Anspruch 1, wobei die Korrekturausmaß-Berechnungseinheit ausgelegt ist, um Folgendes zu umfassen:

eine Steuerwinkelberechnungseinheit (10a), die ausgelegt ist, um die Impulszahl ($P_n$) und den Steuerwinkel ($\alpha$) zu berechnen, um einen Oberwellenverlust der folgenden mathematischen Formel auf Basis der Modulationsrate und der Basiszahl zu verringern oder zu minimieren,

eine zweite Musterbestimmungseinheit, die ausgelegt ist, um das Muster auf Basis der Basiszahl zu bestimmen,

eine Nulldurchgang-Korrekturausmaß-Berechnungseinheit (10c), die ausgelegt ist, um das Nulldurchgang-Korrekturausmaß ($A_1$) auf Basis der Impulszahl ($P_n$), des Steuerwinkels ($\alpha$) und der Modulationsrate ($K_h$\*) zu berechnen, und

eine Peak-Korrekturausmaß-Berechnungseinheit (10b), die ausgelegt ist, um das Peak-Korrekturausmaß ($A_m$) auf Basis der Modulationsrate ($K_h$\*) zu berechnen.

[Mathematische Formel 1]

$$W_h \propto \sum_n V_n^2 n^{\lambda-2} = \frac{4}{\pi^2} \sum_n \left( \sum_n (-1)^k \cos n\alpha_k \right)^2 n^{\lambda-4}$$

(worin "$\lambda$" ein Verlustkoeffizient ist, "n" eine Oberwellenzahl ist, und "Vn" eine Oberwellenspannung ist).

**3.** Motorsteuervorrichtung nach Anspruch 1, wobei die Nulldurchgang-Korrekturphase berechnet wird, um die Impulsspannung innerhalb $\pm$ 38 Grad der jeweiligen Spannungsphase 0 und 180 Grad ein- und auszuschalten, und die Peak-Korrekturphase berechnet wird, um innerhalb $\pm$ 5 Grad der jeweiligen Spannungsphase 90 und 270 Grad ausgeschaltet zu werden.

**4.** Motorsteuervorrichtung nach Anspruch 1, wobei, wenn die Modulationsrate kleiner als 1,22 ist, das Nulldurchgang-Korrekturausmaß unabhängig von der Modulationsrate berechnet wird, selbst wenn die Modulationsrate verändert wird, und das Nulldurchgang-Korrekturausmaß so berechnet wird, dass eine Zeitgebung des Ein- und Ausschaltens der Impulsspannung in einem Bereich innerhalb $\pm$ 38 Grad der jeweiligen Spannungsphase 0 und 180 angepasst ist.

**5.** Motorsteuervorrichtung nach Anspruch 1, wobei, wenn die Modulationsrate kleiner 1,22 ist, das Peak-Korrekturausmaß auf Basis der Modulationsrate so berechnet wird, dass die Impulsspannung innerhalb $\pm$ 5 Grad der jewei-

ligen Spannungsphase 90 und 270 Grad ausgeschaltet wird.

**6.** Motorsteuervorrichtung nach Anspruch 1, wobei, wenn die Modulationsrate größer als 1,22 ist, das Nulldurchgang-Korrekturausmaß auf Basis der Modulationsrate berechnet wird, und
das Peak-Korrekturausmaß auf 1 gesetzt wird.

**7.** Motorantriebssystem, das Folgendes umfasst:

eine Motorsteuervorrichtung nach einem der Ansprüche 1 bis 6;
eine Vektorsteuereinheit (19) und eine V/f-Steuereinheit (18), die ausgelegt sind, um die Grundwellenfrequenz ($f_1$*) und die Modulationsrate ($K_h$*) auf Basis eines Drehmomentbefehls ($\tau$*) oder eines Frequenzbefehls (f*) zu berechnen;
eine Steuerauswahleinheit (21), die ausgelegt ist, um die Vektorsteuereinheit und die V/f-Steuereinheit zu schalten;
eine Steuermodus-Schalteinheit (20), die ausgelegt ist, um den Drehmomentbefehl und den Frequenzbefehl zu schalten; und
eine Phasenberechnungseinheit (22), die ausgelegt ist, um die Spannungsphase auf Basis der Grundwellenfrequenz zu berechnen.

## Revendications

**1.** Dispositif de commande de moteur incluant :

une unité de calcul d'amplitude (7), qui est configurée de manière à calculer une première amplitude ($A_{mp1}$) sur la base d'un taux de modulation ($K_h$*) normalisé par une tension continue ;
une unité de génération d'onde de signal (9), qui est configurée de manière à générer une onde de signal ($V_u$*, $Vv$*, $V_w$*) sur la base d'une phase de tension ($\theta$*) et de la première amplitude ($A_{mp1}$) ;
une unité de calcul de fréquence (3), qui est configurée de manière à calculer un nombre de base (B) et une fréquence porteuse ($f_c$*) sur la base d'une fréquence d'onde fondamentale ($f_1$*) ;
une unité de génération d'onde porteuse (6), qui est configurée de manière à générer une onde porteuse ($V_c$*) sur la base de la fréquence porteuse ;
une unité de commande de modulation d'impulsions en durée, PWM, (15), qui est configurée de manière à comparer l'onde de signal ($V_u$*, $V_v$*, $V_w$*) et l'onde porteuse ($V_c$*), et qui fournit en sortie un signal de maintien (Gun, Gup, Gvn, Gvp, Gwn, Gwv) ; et
un onduleur (2), qui est configuré de manière à commander un élément de commutation sur la base du signal de maintien, et qui fournit en sortie une tension d'impulsion ($V_u$, $V_v$, $V_w$), le dispositif de commande de moteur comprenant :

une unité de correction de fréquence (4), qui est configurée de manière à calculer une fréquence porteuse corrigée ($f_{c2}$*) sur la base du nombre de base (B) qui correspond à un rapport de la fréquence porteuse ($f_c$*) sur la fréquence d'onde fondamentale ($f_1$*), et un motif (P) ;
une unité de détermination de motif (11), qui est configurée de manière à calculer le motif (P) sur la base du nombre de base (B) ;
une première unité de détermination de mode de modulation (5), qui est configurée de manière à commuter une fréquence porteuse finale ($f_c$**), de la fréquence porteuse ($f_c$*) à la fréquence porteuse corrigée ($f_{c2}$*), dans un cas où le taux de modulation ($K_h$*) atteint une valeur prédéterminée égale ou supérieure à « 1 » ;
une unité de calcul de quantité de correction (10), qui est configurée de manière à calculer un nombre d'impulsions ($P_n$), une quantité de correction de passage par zéro ($A_1$), et une quantité de correction de crête ($A_m$) sur la base du taux de modulation ($K_h$*), de la phase de tension ($\theta$*), et du nombre de base (B) ;
une unité de calcul de phase de correction synchrone (12), qui est configurée de manière à calculer une phase de maintien à zéro ($\beta_0$), une phase de passage par zéro ($\beta_1$), et une phase de crête ($\beta_2$), sur la base du nombre d'impulsions ($P_n$), de la fréquence porteuse corrigée ($f_{c2}$*), du motif (P), et de la fréquence d'onde fondamentale ($f_1$*) ;
une unité de génération de signal de correction (13), qui est configurée de manière à générer un signal de correction synchrone (A) sur la base de la phase de maintien à zéro ($\beta_0$), de la phase de passage par zéro ($\beta_1$), de la phase de crête ($\beta_2$), de la quantité de correction de crête ($A_m$), de la quantité de correction de passage par zéro ($A_1$), et de la phase de tension ($\theta$*) ;

une deuxième unité de détermination de mode de modulation (8), qui est configurée de manière à commuter une amplitude finale ($A_{mp}$), de la première amplitude ($A_{mp1}$) à une amplitude fixe ($A_{mp2}$), dans un cas où le taux de modulation ($K_h*$) atteint une valeur prédéterminée égale ou supérieure à 1 ; et

une troisième unité de détermination de mode de modulation (14), qui est configurée de manière à commuter une onde de signal de correction finale ($A*$), de zéro au signal de correction synchrone ($A$), dans un cas où le taux de modulation ($K_h*$) atteint une valeur prédéterminée égale ou supérieure à « 1 ».

**2.** Dispositif de commande de moteur selon la revendication 1,

dans lequel l'unité de calcul de quantité de correction est configurée de manière à inclure :

une unité de calcul d'angle de commande (10a), qui est configurée de manière à calculer le nombre d'impulsions ($P_n$) et l'angle de commande ($\alpha$) pour réduire ou minimiser une perte d'harmonique de la formule mathématique ci-dessous sur la base du taux de modulation et du nombre de base ;

une seconde unité de détermination de motif, qui est configurée de manière à déterminer le motif sur la base du nombre de base ;

une unité de calcul de quantité de correction de passage par zéro (10c), qui est configurée de manière à calculer la quantité de correction de passage par zéro ($A_1$) sur la base du nombre d'impulsions ($P_n$), de l'angle de commande ($\alpha$) et du taux de modulation ($K_h*$) ; et

une unité de calcul de quantité de correction de crête (10b), qui est configurée de manière à calculer la quantité de correction de crête ($A_m$) sur la base du taux de modulation ($K_h*$).

[Formule mathématique 1]

$$W_h \propto \sum_n V_n^2 n^{\lambda-2} = \frac{4}{\pi^2} \sum_n \left( \sum_n (-1)^k \cos n\alpha_k \right)^2 n^{\lambda-4}$$

(où, « $\lambda$ » est un coefficient de perte, « n » est un nombre d'harmoniques, et « Vn » est une tension d'harmonique).

**3.** Dispositif de commande de moteur selon la revendication 1,

dans lequel la phase de correction de passage par zéro est calculée pour activer et désactiver la tension d'impulsion à $\pm 38$ degrés de chacune des phases de tension de « 0 » et « 180 » degrés ; et

la phase de correction de crête est calculée pour être désactivée à $\pm 5$ degrés de chacune des phases de tension de « 90 » et « 270 » degrés.

**4.** Dispositif de commande de moteur selon la revendication 1,

dans lequel, dans un cas où le taux de modulation est inférieur à « 1,22 », la quantité de correction de passage par zéro est calculée indépendamment du taux de modulation y compris lorsque le taux de modulation est modifié ; et

la quantité de correction de passage par zéro est calculée de sorte qu'une temporisation de l'activation et de la désactivation de la tension d'impulsion est mise en correspondance dans une région à $\pm 38$ degrés de chacune des phases de tension de « 0 » et « 180 » degrés.

**5.** Dispositif de commande de moteur selon la revendication 1,

dans lequel, dans un cas où le taux de modulation est inférieur à « 1,22 », la quantité de correction de crête est calculée de sorte que la tension d'impulsion est désactivée à $\pm 5$ degrés de chacune des phases de tension de « 90 » et « 270 » degrés sur la base du taux de modulation.

**6.** Dispositif de commande de moteur selon la revendication 1,

dans lequel, dans un cas où le taux de modulation est supérieur à 1,22, la quantité de correction de passage par zéro est calculée sur la base du taux de modulation ; et

la quantité de correction de crête est définie sur « 1 ».

**7.** Système d'entraînement de moteur, comprenant :

le dispositif de commande de moteur selon l'une quelconque des revendications 1 à 6 ;
une unité de commande vectorielle (19) et une unité de commande V/f (18), qui sont configurées de manière à calculer la fréquence d'onde fondamentale ($f_1$*) et le taux de modulation ($K_h$*) sur la base d'une commande de couple ($\tau$*) ou d'une commande de fréquence (f*) ;
une unité de sélection de commande (21), qui est configurée de manière à commuter l'unité de commande vectorielle et l'unité de commande V/f ;
une unité de commutation de mode de commande (20), qui est configurée de manière à commuter la commande de couple et la commande de fréquence ; et
une unité de calcul de phase (22), qui est configurée de manière à calculer la phase de la tension sur la base de la fréquence d'onde fondamentale.

# FIG. 1

# FIG. 2

# FIG. 3

SECTION A    $Vu^*$    $Vc^*$    $f_c^*{=}9f_1^*$

VOLTAGE (p.u.)

$A_{mp}$

B   B   B

9 PULSES

VOLTAGE (p.u.)

Vu

SECTION A'

VOLTAGE (p.u.)

9 PULSES    Vuv

90    180    270    360

VOLTAGE PHASE (deg)

(a) PULSE PATTERN

VOLTAGE (p.u.)

FUNDAMENTAL COMPONENT    HARMONIC COMPONENTS

0   5   10   15   20   25   30   35   40   45   50

HARMONIC ORDER n

(b) FFT ANALYSIS RESULT OF Vuv

# FIG. 4

Vu* (OVER-MODULATION REGION)  Vu* ((MODULATION REGION)  Vc*

9 PULSES  MODULATION REGION

Vu

SECTION A

7 PULSES  OVER-MODULATION REGION

Vuv

0  90  180  270  360

VOLTAGE PHASE (deg)

(a) PULSE PATTERN

MODULATION REGION

FUNDAMENTAL COMPONENT (0.6 p.u.)

7-TH 0.105(p.u)

13-TH 0.008(p.u)

0  5  10  15  20  25  30  35  40  45  50

OVER-MODULATION REGION

FUNDAMENTAL COMPONENT (1.2 p.u.)

7-TH 0.258(p.u)

13-TH 0.291(p.u)

0  5  10  15  20  25  30  35  40  45  50

HARMONIC ORDER n

(b) FFT ANALYSIS RESULT OF Vuv

# FIG. 5

# FIG. 6

# FIG. 7

| $V_n$ EFFECTIVE VALUE | 1 |
|---|---|
| HARMONIC LOSS Wh | 1 |

(a) CONVENTIONAL METHOD

| $V_n$ EFFECTIVE VALUE | 1 |
|---|---|
| HARMONIC LOSS Wh | $<1$ |

(b) PRESENT INVENTION

# FIG. 8

(a) FIRST PATTERN

(b) SECOND PATTERN

# FIG. 9

(a) OPTIMIZED PULSE PATTERN

(b) CONSTRAINT FOR PWM CONTROL

# FIG. 10

MODULATION RATE Kh* : 1.20

$f_c^* = 21 f_1^*$

VOLTAGE PHASE (deg)

# FIG. 11

MODULATION RATE Kh* : 1.20

*FIG. 12*

# FIG. 13

# FIG. 14

# FIG. 15

## FIG. 16

(a) WAVEFORMS

(b) HARMONIC VOLTAGE $V_h$

FIG. 17

# FIG. 18

| $V_n$ EFFECTIVE VALUE | 1 |
|---|---|
| HARMONIC LOSS Wh | 1 |

(a) CONVENTIONAL METHOD

| $V_n$ EFFECTIVE VALUE | 1 |
|---|---|
| HARMONIC LOSS Wh | <1 |

(b) PRESENT INVENTION

| $V_n$ EFFECTIVE VALUE | 1 |
|---|---|
| HARMONIC LOSS Wh | 1 |

(c) CONVENTIONAL METHOD

| $V_n$ EFFECTIVE VALUE | 1.5 |
|---|---|
| HARMONIC LOSS Wh | <1 |

(d) PRESENT INVENTION

# FIG. 19

# FIG. 20

| TYPES | HARMONIC ORDER |
|---|---|
| HYSTERESIS LOSS OF ELECTROMAGNETIC STEEL PLATE | 1ST |
| EDDY CURRENT LOSS OF ELECTROMAGNETIC STEEL PLATE | 2ND |
| EDDY CURRENT LOSS OF MAGNETIC | 2ND |

**EP 3 432 467 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100134053 A1
- EP 2642655 A1
- JP 2015053824 A